# EUROPÄISCHE PATENTANMELDUNG

(11) **EP 4 070 700 A1**
(43) Veröffentlichungstag der Anmeldung: **12.10.2022**
(21) Anmeldenummer: 21167403.1
(22) Anmeldetag: 08.04.2021
(51) Int. Cl.: A47J 36/32, A47J 37/06

(54) **VERFAHREN UND SYSTEM FÜR EINE WÄRMEZUFUHR ZU GARGUT**

(71) Anmelder: Vorwerk & Co. Interholding GmbH, 42270 Wuppertal (DE)
(72) Erfinder: Frielinghaus, Robert, 44803 Bonn (DE); Stein, Matthias, 45472 Mülheim an der Ruhr (DE)
(74) Vertreter: Gille Hrabal Partnerschaftsgesellschaft mbB Patentanwälte

(57) **Zusammenfassung**

Die Erfindung betrifft ein Verfahren für eine Zufuhr von Wärme zu einem Gargut (18) für eine Zubereitung einer Speise oder eines Getränks mit den Schritten:
• ein Speisenthermometer (13) mit zwei Temperatursensoren (16, 17) wird in Gargut (18) so hineingesteckt, dass ein Temperatursensor (17) sich im Gargut (18) befindet und ein Temperatursensor (16) außerhalb des Garguts (18);
• dem Gargut (18) wird mithilfe einer Heizeinrichtung Wärme zugeführt,
• das Speisenthermometer (13) übermittelt mit den Temperatursensoren (16, 17) gemessene Temperaturen an eine Steuereinrichtung (12);
• die Steuereinrichtung (12) steuert die Heizeinrichtung in Abhängigkeit von übermittelten Temperaturen durch Vergleich von Soll-Temperaturen mit in einer Speichereinheit gespeicherten Ist-Temperaturen und/ oder
• die Steuereinrichtung (12) übermitteltet Handlungsanweisungen an einen Benutzer aufgrund eines Vergleichs von Soll-Temperaturen mit in einer Speichereinheit gespeicherten Ist-Temperaturen und/ oder
• die Steuereinrichtung (12) speichert übermittelte Temperaturen in einer Speichereinheit.

Die Erfindung betrifft außerdem ein System zur Durchführung des Verfahrens.

## Beschreibung

Die Erfindung betrifft ein Verfahren und ein System für eine Zufuhr von Wärme zu einem Gargut für die Zubereitung einer Speise oder eines Getränks. Das Gargut dient zur Herstellung einer Speise oder eines Getränks für eine Nahrungsaufnahme bzw. Flüssigkeitsaufnahme durch einen Menschen.

Die Zubereitung gemäß der vorliegenden Erfindung umfasst die Zufuhr von Wärme zum Gargut durch eine Heizeinrichtung. Diese Zufuhr von Wärme kann bewirken, dass Gargut auf Temperaturen von beispielsweise wenigstens 80 °C oder wenigstens 100°C gebracht wird. Es können auch Temperaturen von 350 °C erreicht werden, so zum Beispiel für das Backen einer Pizza. Temperaturen von mehr als 350 °C werden grundsätzlich nicht überschritten. Die Zufuhr von Wärme kann bewirken, dass Gargut nur mäßig erhitzt wird oder aber lediglich auf eine Temperatur oberhalb von Raumtemperatur gebracht oder gehalten wird. Die Zufuhr von Wärme kann also beispielsweise bewirken, dass Gargut auf eine Temperatur von zum Beispiel 25°C bis 40°C gebracht und/oder eine Temperatur zwischen 25°C bis 40°C konstant gehalten wird.

Um Gargut Wärme zuführen zu können, können gemäß der vorliegenden Erfindung Küchengeräte mit einer Heizeinrichtung wie zum Beispiel Ofen oder Pizzaofen, Mikrowelle, Dampfgarer, Kochstelle mit Kochgefäß, Küchenmaschine oder Grill eingesetzt werden. Als Heizeinrichtung kann aber auch ein Heizköper dienen, der für ein Erwärmen eines Raums vorgesehen ist und der folglich nicht Teil eines Küchengeräts ist.

Beispiele für Gargut, denen erfindungsgemäß Wärme zugeführt werden kann, sind Fleisch, Gemüse, Aufläufe oder Teig für Backwaren.

Es gibt Küchengeräte wie zum Beispiel die Küchenmaschine Thermomix^{®}, die die Temperatur in einem Speisenzubereitungsgefäß messen und steuern können, um Gargut für eine Speisenzubereitung geeignet zu erhitzen. Aus der Druckschrift EP 3 482 661 A1 ist ein Verfahren und ein System zur Anpassung einer Heizleistung wenigstens eines Heizelementes eines Hausgeräts bekannt.

Es ist Aufgabe der vorliegenden Erfindung, eine Speise, deren Zubereitung eine Zufuhr von Gargut erfordert, verbessert und flexibel zubereiten zu können.

Zur Lösung der Aufgabe dient ein Verfahren mit den Merkmalen von Anspruch 1 und ein System mit den Merkmalen des Nebenanspruchs. Vorteilhafte Ausgestaltungen ergeben sich aus den abhängigen Ansprüchen.

Gemäß dem Verfahren wird ein Speisenthermometer mit zwei Temperatursensoren in ein Gargut so hineingesteckt, dass ein Temperatursensor sich im Gargut befindet und ein Temperatursensor außerhalb des Garguts. Dadurch kann die Temperatur im Inneren des Garguts gemessen werden und die Außentemperatur, die in der unmittelbaren Umgebung des Garguts herrscht. Es werden also Ist-Temperaturen gemessen.

Ein Speisenthermometer ist ein Thermometer, das dazu bestimmt und geeignet ist, Temperaturen von Gargut für die Zubereitung einer Speise zu messen. Das Speisenthermometer kann also Temperaturen messen, die bei der Zubereitung einer Speise üblicherweise auftreten. Es handelt sich also nicht um ein Thermometer, welches sehr tiefe Temperaturen von beispielsweise weniger als - 50 °C messen kann und soll oder sehr hohe Temperaturen von beispielsweise mehr als 500 °C. Das Speisenthermometer kann vorzugsweise auch Temperaturen messen, wie sie in einem Pizzaofen auftreten können, also Temperaturen von beispielsweise bis zu 350 °C. Das Speisenthermometer kann vorzugsweise auch Temperaturen messen, die wenigstens oberhalb von 20°C liegen. Das Speisenthermometer weist grundsätzlich eine Spitze auf, damit das Speisenthermometer ohne großen Kraftaufwand in eine Speise hineingesteckt werden kann. Das Speisenthermometer weist grundsätzlich eine längliche Form auf, um zwei Temperatursensoren mit einem geeigneten Abstand im Speisenthermometer unterbringen zu können. Durch einen jeden Temperatursensor kann dann eine Temperatur gemessen werden. Das Speisenthermometer ist vorzugsweise so beschaffen, dass dieses in einem Ofen bei Temperaturen bis wenigstens 200°C und vorzugsweise auch in einem Dampfgarer eingesetzt werden kann. Das Speisenthermometer ist ein Thermometer, welches unabhängig von einem anderen Küchengerät ist. Es ist also kein Thermometer, welches in ein Küchengerät eingebaut ist. Das Speisenthermometer ist vorzugsweise batteriebetrieben. Es kann also über eine eingebaute Batterie mit Strom versorgt werden. Die Batterie ist insbesondere wiederaufladbar.

Dem Gargut wird in der Regel mithilfe einer Heizeinrichtung Wärme zugeführt. Die Heizeinrichtung kann wie eingangs beschrieben eine Heizeinrichtung eines Küchengeräts sein. Ist die Heizeinrichtung Teil eines Küchengeräts, so handelt es sich insbesondere um eine elektrische Heizeinrichtung. Die Heizeinrichtung kann eine induktive Herdplatte sein. Die Heizeinrichtung kann eine elektrische Widerstandsheizung sein. Die Heizeinrichtung kann ein Mikrowellengenerator sein. Die Heizeinrichtung kann aber auch ein Heizkörper sein, um Innenräume heizen zu können. Ein solcher Heizkörper kann beispielsweise durch warmes Wasser erwärmt werden, welches durch den Heizkörper hindurchströmen kann.

Eine Wärmezufuhr kann aber beispielsweise auch durch einen Gärprozess erfolgen, der im Gargut stattfindet. Wesentlich ist lediglich, dass sich die Temperatur des Garguts verändert und diese Temperaturveränderung durch das Thermometer gemessen wird.

Das Speisenthermometer übermittelt die mit seinen ein oder mehreren Temperatursensoren gemessenen ein oder mehreren Ist-Temperaturen an eine Steuereinrichtung. Die Übermittlung von Ist-Temperaturen kann drahtlos oder mithilfe eines elektrischen Leiters durchgeführt werden. Das Speisenthermometer kann also über eine drahtlose Sende- und Empfangseinrichtung verfügen. Die Steuereinrichtung kann Teil eines Küchengeräts sein. Die Steuereinrichtung kann also beispielsweise Teil einer Küchenmaschine sein. Die Steuereinrichtung kann aber auch ein externes Gerät unabhängig von einem Küchengerät sein. Die Steuereinrichtung kann Teil eines Computers sein, der mit einer Vielzahl von Küchengeräten so verbunden sein kann, dass der Computer mit den Küchengeräten Daten austauschen kann. Der Computer kann räumlich getrennt von dem Ort sein, bei dem Gargut Wärme zugeführt wird. Wird beispielsweise dem Gargut Wärme in einer Küche eines Privathaushalts zugeführt, so kann der Computer außerhalb des Privathaushalts vorhanden sein. Die Steuereinrichtung ist eine elektronische Einrichtung, die beispielsweise einen integrierten Schaltkreis umfassen kann, mit dem Rechenoperationen durchgeführt werden können.

Es kann eine Speichereinheit vorhanden sein, in der Soll-Temperaturen gespeichert sind oder zumindest gespeichert werden können. Soll-Temperaturen sind Temperaturen, die erreicht werden sollen. Die Speichereinheit ist eine elektronische Speichereinheit, in der Daten elektronisch gespeichert werden können. Die Speichereinheit kann durch ein externes Gerät bereitgestellt sein. Die Speichereinheit kann dauerhaft physisch mit der Steuereinrichtung verbunden sein. Die Speichereinheit kann Teil eines Küchengeräts sein. Die Speichereinheit kann also beispielsweise Teil einer Küchenmaschine sein. In der Speichereinheit können Soll-Temperaturen insbesondere paarweise in Abhängigkeit von Gargut gespeichert sein oder werden, sodass für jeden der zwei verschiedenen Messwerte eine Soll-Temperatur vorgegeben sein kann. In der Speichereinheit sind dann also ein oder mehrere Temperaturpaare gespeichert und außerdem eine Information, auf welches Gargut sich die Temperaturpaare beziehen. Es können zeitliche Verläufe von Soll-Temperaturen oder Temperaturpaaren in Abhängigkeit von Gargut gespeichert sein. Die eine Soll-Temperatur eines Temperaturpaars bzw. der eine zeitliche Verlauf einer Soll-Temperatur kann sich dann auf die Temperatur beziehen, die in unmittelbarer Nachbarschaft des betroffenen Garguts herrschen soll. Die andere Soll-Temperatur des Temperaturpaars bzw. der andere zeitliche Verlauf der Soll-Temperatur kann sich dann auf die Temperatur beziehen, die im betroffenen Gargut herrschen soll. In der Speichereinheit kann also eine erste Soll-Temperatur oder ein erstes Soll-Temperaturprofil für den ersten Temperatursensor und/oder eine zweite Soll-Temperatur oder ein zweites Soll-Temperaturprofil für den zweiten Temperatursensor in Abhängigkeit vom Gargut in der Speichereinheit gespeichert sein.

Die Speichereinheit kann ebenfalls einen integrierten Schaltkreis umfassen, durch den Daten elektronisch gespeichert werden können.

Die Steuereinrichtung kann die Heizeinrichtung in Abhängigkeit von den übermittelten Temperaturen, also in Abhängigkeit von Ist-Temperaturen, durch Vergleich mit gespeicherten Soll-Temperaturen steuern. Durch die Steuereinrichtung kann beispielsweise die Heizeinrichtung so gesteuert werden, dass das Innere des Garguts und/oder die Umgebungstemperatur des Garguts auf eine jeweils gespeicherte Soll-Temperatur gebracht wird und/ oder auf der jeweils gespeicherten Soll-Temperatur gehalten wird. Durch die Steuereinrichtung können Ist-Temperaturen, also die gemessenen Temperaturen, zeitabhängig gesteuert werden. Durch die Steuereinrichtung kann beispielsweise die zeitliche Dauer für eine Zufuhr von Wärme geregelt werden, um so Ist-Temperaturen zu steuern. Im Vergleich zum Stand der Technik gelingt ein verbessertes Ergebnis, weil detaillierte Temperaturinformationen zur Verfügung stehen und für die Wärmezufuhr und damit für eine Speisenzubereitung genutzt werden können. Es ist so möglich, sehr genau ein gewünschtes Zubereitungsergebnis zu erzielen, ohne dass dafür ein Benutzer während der Wärmezufuhr tätig werden müsste.

Alternativ oder ergänzend kann die Steuereinrichtung Handlungsanweisungen an einen Benutzer übermitteln. Dies geschieht insbesondere dann, wenn die Steuereinrichtung eine hinreichend große Abweichung von Ist-Temperaturen im Vergleich zu in der Speichereinheit gespeicherten Soll-Temperaturen registriert. Eine hinreichend große Abweichung kann als Schwellwert in der Speichereinheit gespeichert sein. Im Vergleich zum Stand der Technik gelingt wiederum ein verbessertes Ergebnis, weil sehr detaillierte Temperaturinformationen zur Verfügung stehen und genutzt werden können. Außerdem sind zur Verfügung stehende Heizeinrichtungen frei wählbar, da es nicht darauf ankommt, dass die Steuereinrichtung die Wärmezufuhr einer ausgewählten Heizeinrichtung unmittelbar steuern kann.

Alternativ oder ergänzend kann die Steuereinrichtung ein Zubereitungsrezept in Abhängigkeit von übermittelten Ist-Temperaturen erstellen. Die Steuereinrichtung kann also während einer Wärmezufuhr zum Gargut gemessene Ist-Temperaturen oder zeitabhängige Ist-Temperaturprofile erfassen und in der Speichereinheit speichern. So gespeicherte Temperaturen oder Temperaturprofile können für eine nachfolgende Zubereitung einer Speise als Soll-Temperaturen bzw. als Soll-Temperaturprofile verwendet werden, um gleichem Gargut auf die gleiche Weise Wärme zuführen zu können. Ein Benutzer ist also in der Lage, Gargut gemäß eigenen Vorlieben zu erhitzen und ein einmal erfolgreich durchgeführtes Erhitzen so abzuspeichern oder automatisiert abspeichern zu lassen, dass dieses Erhitzen im Rahmen einer nächsten Speisenzubereitung automatisiert oder mithilfe von Anweisungen an den Benutzer reproduziert werden kann. Ein Benutzer kann so ein bereits vorhandenes Rezept an seine eigenen Vorlieben anpassen oder aber eigene Rezepte erstellen. Das Rezept umfasst dann Informationen zum Gargut und Informationen zu Temperaturen und/oder zeitlichen Temperaturverläufen.

Das Verfahren kann sehr flexibel durchgeführt werden. Es ist also möglich, dass eine Datenbank mit gespeicherten Temperaturen oder Temperaturverläufen außerhalb eines Privathaushalts bereitgestellt wird, auf die dann über das Internet zugegriffen werden kann. Es ist aber auch möglich, dass eine solche Datenbank in ein Küchengerät integriert ist. Entsprechendes gilt für die Steuereinrichtung, die Teil eines Küchengeräts sein kann, aber auch außerhalb eines Privathaushalts vorhanden sein kann. Das Verfahren wird bevorzugt in Privathaushalten durchgeführt. Das erfindungsgemäße System wird bevorzugt in Privathaushalten eingesetzt.

Da das Thermometer kein Thermometer ist, welches in ein Küchengerät integriert ist, kann es flexibel eingesetzt werden. So ist es möglich, dass ein erstes Küchengerät Handlungsanweisungen für die Steuerung von Temperaturen übernimmt, die in einem zweiten Küchengerät mithilfe des Thermometers gemessen werden. Das erste Küchengerät kann also beispielsweise eine Küchenmaschine sein. Das zweite Küchengerät kann ein Ofen sein. Durch die Möglichkeit, Handlungsanweisungen an einen Benutzer zu übermitteln, können beliebig viele verschiedene zweite Küchengeräte genutzt werden. Es ist also nicht nötig, dass ein erstes und ein zweites Küchengerät so eingerichtet sind, dass diese miteinander Daten austauschen können.

Vorzugsweise ist ein gespeichertes Temperaturprofil vorhanden, das einen Temperaturanstieg am Anfang einer Garzeit oder beim Ende einer Garzeit umfasst. Mit Temperaturanstieg am Anfang einer Garzeit ist gemeint, dass zu Beginn eine relativ hohe Temperatur eingestellt wird, die anschließend wieder abgesenkt wird. Mit Temperaturanstieg gegen Ende einer Garzeit ist gemeint, dass gegen Ende einer Garzeit eine relativ hohe Temperatur eingestellt wird, die zuvor geringer war. Ein solcher Temperaturanstieg dient der Herstellung einer Kruste und/oder einer gebräunten Oberfläche, wie sie beispielsweise im Fall von Brot, Fleisch oder überbackenem Käse erwünscht sein kann. Im Fall von Teig für Backwaren gibt es den Temperaturanstieg vorzugsweise gegen Ende der Garzeit bzw. gegen Ende der Backzeit. Im Fall von Fleisch gibt es den Temperaturanstieg vorzugsweise zu Beginn der Garzeit.

Eine Handlungsanweisung an den Benutzer kann beispielsweise über ein Display grafisch und/oder über einen Lautsprecher akustisch ausgegeben werden. Das Display kann ein Display eines Küchengeräts oder eines Mobiltelefons sein. Der Lautsprecher kann ein Lautsprecher eines Küchengeräts oder eines Mobiltelefons sein.

In einer Ausgestaltung kann an den Benutzer als Handlungsanweisung übermittelt werden, dass der Benutzer einen Abstand zwischen Gargut und Heizeinrichtung einstellen oder verändern soll. Ein Brotteig mit darin eingestecktem Speisenthermometer kann beispielsweise in der Nähe eines Heizkörpers gestellt worden sein, damit beispielsweise Hefe in dem Brotteig geeignet aktiv werden kann. An den Benutzer kann dann als Handlungsanweisung übermittelt werden, den Abstand zwischen Brotteig und Heizkörper zu verändern, wenn keine geeignete Umgebungstemperatur durch den Temperatursensor des Speisenthermometers gemessen wird, der sich außerhalb des Brotteigs befindet. Wird beispielsweise ein Brotteig mit darin eingestecktem Speisenthermometer in einen Ofen gestellt, damit der Brotteig gebacken werden kann, so kann an den Benutzer als Handlungsanweisung übermittelt werden, den Brotteig anders im Ofen zu platzieren, wenn keine geeignete Umgebungstemperatur gemessen wird. Alternativ oder ergänzend kann an den Benutzer als Handlungsanweisung übermittelt werden, die gewünschte Ofentemperatur des Ofens anders einzustellen.

Das Messen einer Temperatur innerhalb von Gargut kann dazu genutzt werden, um die zeitliche Dauer der Wärmezufuhr zu regulieren. So kann bei Erreichen einer vorgesehenen Innentemperatur des Garguts die weitere Wärmezufuhr eingestellt werden oder aber an den Benutzer die Handlungsanweisung übermittelt werden, die Wärmezufuhr auszuschalten. Bei Erreichen einer vorgesehenen Innentemperatur des Garguts kann aber auch ein Temperaturanstieg bewirkt werden, um eine Kruste und/oder eine gut gebräunte Oberfläche zu erzeugen. Der Temperaturanstieg kann durch eine Handlungsanweisung an den Benutzer bewirkt werden oder aber durch eine direkte Steuerung der Heizeinrichtung durch die Steuereinrichtung. Das Beispiel zeigt, dass ein gespeichertes Soll-Temperaturprofil kein Temperaturprofil sein muss, das von der Zeit abhängt. Stattdessen kann ein Soll-Temperaturprofil zum Beispiel von gemessenen Ist-Temperaturen abhängen.

Gespeicherte Soll-Temperaturen sowie gespeicherte Soll-Temperaturprofile sind vorzugsweise in Abhängigkeit von Dimensionen von Gargut gespeichert. Gewicht von Gargut, Volumen von Gargut oder Dicke von Gargut sind Dimensionen im Sinne der Erfindung. Eine gespeicherte Soll-Temperatur oder ein gespeichertes Soll-Temperaturprofil können also beispielsweise davon abhängen, ob Gargut 500g oder 1000g wiegt oder ein Volumen von 500ml oder 1000ml aufweist. Eine gespeicherte Soll-Temperatur oder ein gespeichertes Soll-Temperaturprofil können also beispielsweise davon abhängen, ob Gargut 2cm oder 4cm dick ist.

Vorzugsweise wird eine Küchenmaschine mit integrierter Waage dafür genutzt, um Gewicht oder Volumen von Gargut zu bestimmen. Das Gewicht oder das Volumen von Gargut können mithilfe der integrierten Waage bestimmt werden. Das Volumen kann im Fall von fließfähigem Gargut durch das Speisenzubereitungsgefäß der Küchenmaschine bestimmt werden, wenn das Speisenzubereitungsgefäß entsprechende Markierungen für verschiedene Volumina aufweist. Die Küchenmaschine., so zum Beispiel die Außenseite des Speisenzubereitungsgefäßes kann Markierungen aufweisen, mit denen die Dicke von Gargut ermittelt werden kann. Eine Dimension von Gargut kann auch mit ein oder mehreren anderen Sensoren bestimmt werden oder durch einen Benutzer geschätzt werden.

In Abhängigkeit von einer ermittelten Dimension werden dann die entsprechenden Soll-Temperaturen für die Wärmezufuhr ausgewählt. Dies kann automatisiert geschehen, so zum Beispiel durch eine Küchenmaschine, wenn beispielsweise die Waage der Küchenmaschine für die Bestimmung einer Dimension genutzt wird. Eine ermittelte Dimension kann aber auch über eine Eingabeeinrichtung dem System durch einen Benutzer mitgeteilt werden. Das System wählt anschließend die zugehörigen Soll-Temperaturen aus.

Vorzugsweise umfasst eine Küchenmaschine die Steuereinrichtung, da eine Küchenmaschine aufgrund eines relativ geringen Platzbedarfs auch in kleinen Küchen eingesetzt werden kann. Eine Küchenmaschine im Sinne der Erfindung ist ein Küchengerät, welches ein Standteil und ein vom Standteil abnehmbares Speisenzubereitungsgefäß für die Zubereitung einer Speise umfasst. Im Standteil befindet sich dann die Steuereinrichtung. Die Küchenmaschine umfasst ein Mischwerkzeug, mit dem Zutaten einer Speise im Speisenzubereitungsgefäß gemischt und/oder zerkleinert werden können. Das Mischwerkzeug kann mit hohen Drehzahlen von mehreren 1000 Umdrehungen/min gedreht werden, so zum Beispiel mit wenigstens 8000 Umdrehungen/min, vorzugsweise mit wenigstens 10.000 Umdrehungen/min. Die Drehzahl kann reguliert werden. Das Standteil ist so dimensioniert, dass die Küchenmaschine mit den genannten hohen Drehzahlen Zutaten einer Speise verarbeiten kann, ohne dass die Standfestigkeit der Küchenmaschine gefährdet wäre. Das Volumen des Speisenzubereitungsgefäßes kann beispielsweise zwischen 0,5 I und 3 I liegen. Eine Küchenmaschine im Sinne der vorliegenden Erfindung kann eine Heizeinrichtung umfassen, um Zutaten einer Speise in dem Speisenzubereitungsgefäß erhitzen zu können. Eine Küchenmaschine im Sinne der vorliegenden Erfindung kann eine Waage umfassen, um Zutaten einer Speise in dem Speisenzubereitungsgefäß wiegen zu können.

Es kann eine Eingabeeinrichtung vorhanden sein, mit der ausgewählt werden kann, wie die Steuereinrichtung übermittelte Ist-Temperaturen verarbeitet. Es kann dann also beispielsweise mithilfe der Eingabeeinrichtung ausgewählt werden, ob eine Heizeinrichtung in Abhängigkeit von übermittelten Ist-Temperaturen gesteuert werden soll oder ob ausschließlich Handlungsanweisungen an einen Benutzer ausgegeben werden sollen oder ob Ist-Temperaturen für das Erstellen eines Zubereitungsrezepts als Soll-Temperaturen gespeichert werden sollen. Es ist in einer Ausgestaltung der Erfindung auch möglich, dass mithilfe der Eingabeeinrichtung ausgewählt werden kann, ob eine Heizeinrichtung in Abhängigkeit von übermittelten Temperaturen gesteuert wird und ergänzend bei Bedarf Handlungsanweisungen an einen Benutzer ausgegeben werden. Die Eingabeeinrichtung ist insbesondere Teil einer Küchenmaschine.

Die Erfindung ist besonders vorteilhaft für die Herstellung von Backwaren. Ein Teigwaren-Backprozess gliedert sich in 2 bis 3 Hauptschritte (ggf. Gären, Backen, Abkühlen). All diese Schritte haben spezifische Anforderungen an ihre Umgebungstemperatur. Die Teigtemperatur wiederum lässt Rückschlüsse zu, ob die jeweilige Phase abgeschlossen bzw. im korrekten Rahmen abläuft.

In einem konventionellen Backvorgang (temperatur- und zeitgesteuert) läuft keine dieser Phasen wirklich kontrolliert ab. Ein Backofen selbst hat häufig Temperaturabweichungen und -inhomogenitäten von über ±10%. Selbst die Verwendung eines konventionellen Speisenthermometers kann solche Probleme nicht zufriedenstellend lösen und setzt außerdem besondere Kenntnisse und Erfahrungen beim Benutzer voraus.

Durch die Erfindung ist es möglich, demgegenüber wesentlich verbessert Backwaren herstellen zu können, ohne dafür besondere Kenntnisse oder Erfahrungen beim Benutzer voraussetzen zu müssen. Selbst wenn ein Benutzer selber aufgrund von Handlungsanweisungen aktiv werden muss, so wird dieser Aufwand minimiert, da ein Benutzer nicht selber fortlaufend kontrollieren muss. Die Erfindung bezieht sich daher insbesondere auf die Zufuhr von Wärme zu Teig für die Zubereitung von Backwaren wie Brot oder Brötchen. Insbesondere wird dann dem Teig während des Backens Wärme so zugeführt, dass es gegen Ende der Backzeit einen Temperaturanstieg gibt. Nach dem Ende der Backzeit wird vorzugsweis dem Benutzer eine Abkühlzeit mitgeteilt. Die Mitteilung eine Abkühlzeit kann zum Beispiel grafisch über ein Display angezeigt werden. Es kann beispielsweise ein Timer angezeigt werden, der fortlaufend anzeigt, wie lange noch gewartet werden muss, um das Ende der Abkühlzeit zu erreichen. Dem Benutzer kann die Abkühlzeit mitgeteilt werden, indem nach dem Erreichen des Endes der Abkühlzeit ein akustisches Signal ertönt oder und/oder das erreichte Ende der Abkühlzeit auf einem Display angezeigt wird.

Eine solche Abkühlzeit kann in der Speichereinheit in Abhängigkeit vom Gargut gespeichert sein. Vorzugsweise ist jedoch eine Soll-Temperatur für das Gargut gespeichert. Wird diese durch Abkühlen nach Beendigung des Backvorgangs erreicht, so ist das Ende der Abkühlzeit erreicht. Anschließend kann das Gargut weiter genutzt werden. Im Fall von Brot kann dieses nach Ablauf der Abkühlzeit beispielsweise gegessen werden.

Der Benutzer kann durch die Erfindung über den gesamten Backprozess begleitet werden und zwar beispielsweise durch Anweisungen bereits während der Teigzubereitung bis zum Backen. Die Temperaturen des gesamten Backprozesses (Gär-, Back- und Abkühltemperaturen) können sowohl im Teiginneren wie auch in der Umgebung überwacht werden. Anhand dieser Daten kann der Nutzer beispielsweise selbst entscheiden, ob und wie er reagiert (manueller Modus) oder eine Empfehlung erhalten, wie er reagieren sollte. Der Benutzer kann beispielsweise durch ein akustisches Alarmsignal auf ein Backende hingewiesen werden. Ein akustisches Alarmsignal kann dazu auffordern, dass eine Temperatur im Backofen nachzuführen ist (semiautomatischer Modus).

Sind die technischen Voraussetzungen erfüllt, so kann vollautomatisch reagieret werden. Eine Temperatur im Backofen kann dann beispielsweise vollautomatisch nachgeführt werden. Selbst für ungeübte Benutzer ohne besondere Vorkenntnisse ist es dadurch möglich, perfekte Backergebnisse zu erzielen. Außerdem kann der Benutzer die Balance aus Planbarkeit und gutem Backergebnis aktiv beeinflussen: Anstelle einer starren, planbaren Zeitvorgabe mit einem mitunter unzuverlässigen Ergebnis kann er sich für eine dynamische Backzeit entscheiden, die ihn zumindest einige Minuten vor Ablauf informiert, dafür aber ein perfektes Backergebnis ermöglicht.

Die Erfindung betrifft grundsätzlich ein Speisenthermometer mit wenigstens zwei Temperatursensoren. Soweit nicht ausdrücklich das Vorhandensein von zwei Temperatursensoren voraussetzt wird, genügt ein Speisenthermometer mit nur einem Temperatursensor. Es können auch mehr als zwei Temperatursensoren vorhanden sein. Sind mehr als zwei Temperatursensoren vorhanden, so können diese entlang der Länge des Speisenthermometers verteilt sein.

Dem Gargut wird zwar im Verlaufe der Zubereitung grundsätzlich immer Wärme zugeführt. Es kann aber auch Abkühlphasen geben. Dem Gargut wird dann Wärme entzogen. In diesem Fall kann das erfindungsgemäße Verfahren durchgeführt werden, ohne dass Wärme zugeführt wird. Eine Wärmezufuhr ist also zwar in der Regel vorhanden. Dies muss aber nicht immer zwingend der Fall sein.

Nachfolgend wird die Erfindung anhand von Beispielen nebst Figuren näher erläutert.

Es zeigen
- Figur 1:: Küchenmaschine;
- Figur 2:: Speisenthermometer;
- Figur 3:: Verwendung des Speisenthermometers.

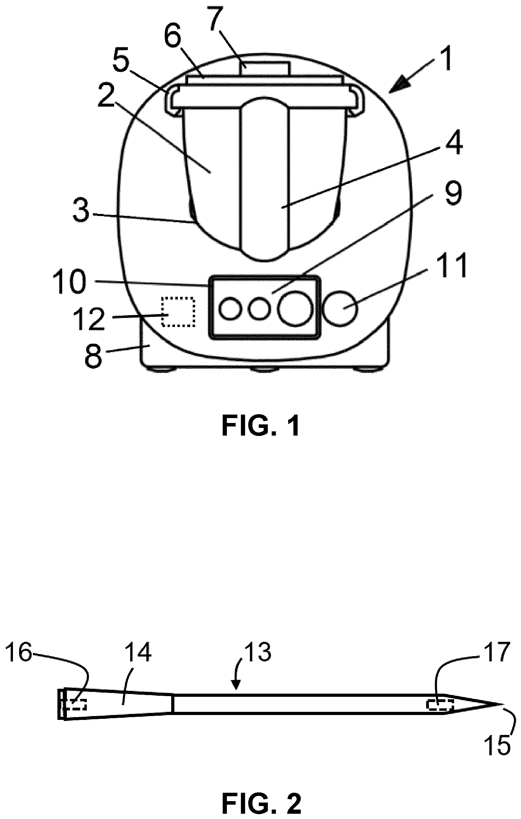

Die Figur 1 zeigt eine Küchenmaschine 1. Die Küchenmaschine 1 umfasst ein Speisenzubereitungsgefäß 2, welches in eine Halterung 3 der Küchenmaschine 1 eingesetzt ist. Das Speisenzubereitungsgefäß 2 umfasst einen Griff 4, um das Speisenzubereitungsgefäß 2 aus der Halterung 3 leicht entfernen zu können. Die Küchenmaschine 1 kann einen Schließmechanismus mit beispielsweise schwenkbar gelagerten Armen 5 umfassen. In der in der Figur 1 gezeigten Schließstellung umschließen die Arme 5 einen Deckel 6. Dadurch ist der Deckel 6 dann fest mit dem Speisenzubereitungsgefäß 2 verbunden. Der Deckel 6 kann eine Öffnung umfassen, in welche ein zum Beispiel transparentes Gefäß 7 eingesetzt sein kann. Durch das Gefäß 7 kann die Öffnung in dem Deckel 6 verschlossen werden. Das Gefäß 7 kann jederzeit von der Öffnung abgehoben werden, sodass dann eine Öffnung bereitstellt ist, durch die hindurch eine Zutat in das Speisenzubereitungsgefäß 2 eingefüllt werden kann. Das Gefäß 7 kann als Dosierhilfe dienen. Wird der optional vorgesehene Schließmechanismus geöffnet, dann kann der Deckel 6 vom Speisenzubereitungsgefäß 2 entfernt werden. Die Küchenmaschine 1 umfasst für ein Aufstellen ein Standteil 8. Das Standteil kann beispielsweise über ein Stromkabel mit einer externen Stromquelle verbunden werden. Das Standteil kann aber auch eine wiederaufladbare Batterie für seine Stromversorgung umfassen.

Eine Benutzeroberfläche 9 wird auf einem Display 10 dargestellt. Das Display 10 ist vorzugsweise berührungsempfindlich, um beispielsweise Betriebsparameter durch Berühren des Displays einstellen zu können. Das Display 10 dient als Ein- und Ausgabeeinrichtung. Die Küchenmaschine 1 kann als zusätzliche Eingabeeinrichtung beispielsweise einen Dreh- und/oder Druckknopf 11 umfassen, der ebenfalls dazu dienen kann, im Zusammenspiel mit der Benutzeroberfläche 9 einen oder mehrere Betriebsparameter einstellen zu können. Wird in der Benutzeroberfläche 9 beispielsweise eine Bestätigung beispielsweise für die Durchführung eines Kochschritts durch den Benutzer angefordert, so kann durch Druck auf den Dreh- und/oder Druckknopf 11 die Bestätigung eingegeben werden. Bezieht sich die Benutzeroberfläche 9 beispielsweise auf eine Rühr- und Schneideinrichtung der Küchenmaschine 1, so kann durch Drehen an dem Dreh- und/oder Druckknopf 11 beispielsweise eine Drehgeschwindigkeit eingestellt werden. Durch Drehen an dem Dreh- und/oder Druckknopf 11 können beispielsweise auch Zeitdauern für bestimmte Speisenzubereitungsprozesse und/oder Temperaturen eingestellt werden.

Die Küchenmaschine 1 umfasst eine schematisch dargestellte Steuereinrichtung 12, die beispielsweise auf ein digital in einer externen Speichereinheit gespeichertes oder in der Küchenmaschine gespeichertes Rezept zugreifen und durch einen Rezeptschritt des Rezepts veranlasst werden kann, die Funktionskomponenten der Küchenmaschine 1 und weiterer Küchengeräte so zu betreiben, wie es in einem Rezeptschritt des Rezepts definiert ist. Die Steuereinrichtung 12 ist mit einer drahtlosen Sende- und/oder Empfangseinheit verbunden, um jeweilige datentechnische Verbindungen zu einem Speisenthermometer, einem Computer, einem Mobiltelefon und/oder mindestens einem weiteren Küchengerät herzustellen. Darüber hinaus kann die Steuereinrichtung 12 dazu eingerichtet sein, das digitale Rezept für einen Speisenzubereitungsvorgang zu optimieren oder ein digitales Rezept für einen Speisenzubereitungsvorgang zu erstellen und ein erstelltes digitales Rezept in der externen Speichereinheit oder in einer Speichereinheit der Küchenmaschine 1 abzuspeichern. Die Steuereinrichtung 12 kann zugleich die Speichereinheit umfassen.

Das Speisenzubereitungsgefäß 2 umfasst in seinem Grund ein nicht gezeigtes Mischwerkzeug, dessen Welle durch den Boden des Speisenzubereitungsgefäßes 2 hindurchreicht. Die Welle wird durch einen Elektromotor angetrieben, der sich im Standteil 8 befindet. Die Welle des Mischwerkzeugs kann durch eine lösbare Kupplung mit der Welle des Elektromotors verbunden sein.

Die Figur 2 zeigt ein Speisenthermometer 13. Das Gehäuse des Speisenthermometers 13 besteht mit Ausnahme eines Griffs 14 aus Metall. Der Griff 14 befindet sich bei einem Ende des Speisenthermometers 13. Der Griff 14 besteht aus einem wärmeisolierenden Material wie Kunststoff. Der Griff 14 besteht beispielsweise aus einem Elastomer. Das dem Griff 14 gegenüberliegende Ende des Speisenthermometers 13 wird durch eine Spitze 15 gebildet. Das Speisenthermometer 13 verfügt über zwei Temperatursensoren 16 und 17. Der eine Temperatursensor 17 befindet sich bei der Spitze 15. Der andere Temperatursensor 16 befindet sich beim Griff 14 und grenzt an die Stirnseite des länglichen Speisenthermometers 13. Die Stirnseite kann wie dargestellt radiergummiartig (ähnlich wie bei einem Bleistift mit einem endseitig angebrachten Radiergummi) beschaffen sein, um einen guten Wärmeaustausch erzielen zu können. Dadurch ist der Temperatursensor 16 so angeordnet, dass dieser durch den wärmeisolierenden Griff 14 nicht in unerwünschter Weise thermisch abgeschirmt wird.

Im Querschnitt kann das Speisenthermometer 13 rund sein, um besonders einfach gereinigt werden zu können.

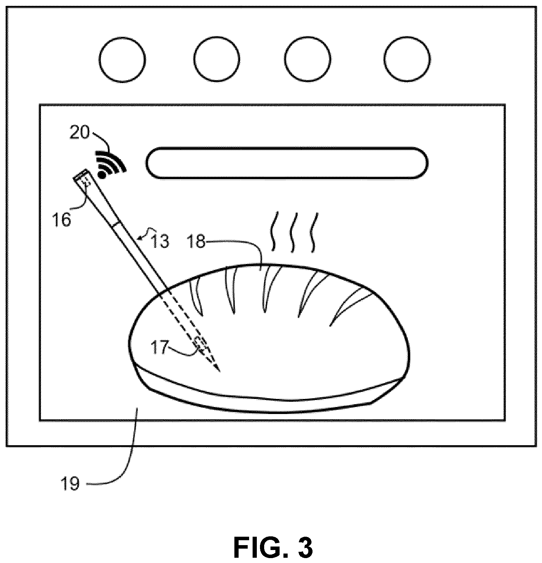

Die Figur 3 zeigt einen Brotteig 18, der sich in einem Ofen 19 befindet. Das Speisenthermometer 13 ist mit der Spitze in den Brotteig 18 hineingesteckt worden. Dadurch befindet sich der bei der Spitze vorhandene Temperatursensor 17 im Brotteig 18. Der Temperatursensor 16, der beim Griff angeordnet ist, befindet sich außerhalb des Brotteigs 18, aber innerhalb des Ofens 19. Über eine drahtlose Sende- und Empfangseinrichtung 20 werden die gemessenen Ist-Temperaturen drahtlos an die Steuereinrichtung 12 der Küchenmaschine 1 übermittelt. Die Steuereinrichtung 12 vergleicht die mit dem Speisenthermometer 13 gemessenen Ist-Temperaturen mit Soll-Temperaturen, die für das Backen des Brotteigs 18 in der Speichereinheit gespeichert sind. Stellt die Steuereinrichtung 12 beispielsweise fest, dass eine übermittelte Ist-Temperatur des Temperatursensors 16, der die im Ofen herrschende Temperatur misst, von einer gespeicherten Soll-Temperatur signifikant abweicht, so informiert die Küchenmaschine 1 über das Display 10, dass die Ofentemperatur geändert werden soll. Durch ein akustisches Signal der Küchenmaschine kann der Benutzer ergänzend auf den Handlungsbedarf aufmerksam gemacht werden.

Mit signifikanter Abweichung ist gemeint, dass eine derart große Temperaturabweichung durch die Steuer- und Speichereinheit festgestellt wurde, dass ein in der Speichereinheit gespeicherter Schwellwert überschritten worden ist.

Stellt die Steuereinrichtung 12 beispielsweise fest, dass eine übermittelte Ist-Temperatur des Temperatursensors 17, der die im Brotteig herrschende Temperatur misst, eine gespeicherte Soll-Temperatur erreicht hat, so informiert die Küchenmaschine 1 über das Display 10 beispielsweise, dass die Ofentemperatur erhöht werden soll, um abschließend eine Kruste des Brotteigs zu optimieren. Durch ein akustisches Signal der Küchenmaschine kann der Benutzer ergänzend auf den Handlungsbedarf aufmerksam gemacht werden.

Die Grundlage der Erfindung bildet also das Thermometer 13. Es ist vorteilhaft wie gezeigt bleistiftförmig und weist ein Thermoelement 17 in der Spitze 15 (die ein leichtes Einführen ins Gargut ermöglicht) zur Messung der Innen- bzw. Kerntemperatur von Gargut auf sowie ein weiteres Thermoelement 16 im "Radiergummiteil" zur Bestimmung der Umgebungstemperatur. Dieses Thermometer kann vorzugsweise über eine Bluetooth-Verbindung mit der Küchenmaschine 1 drahtlos gekoppelt werden, da in einer Küche entsprechend geringe Distanzen zu überbrücken sind und um den Stromverbrauch für das Speisenthermometer zu minimieren.

Vor einem Backen kann im Rahmen eines Gärungsprozesses im Brotteig 18 beispielsweise eine zu niedrige Gärtemperatur, also eine zu niedrige Ist-Temperatur, gemessen worden sein. In Form einer Handlungsanweisung kann ein Benutzer dann aufgefordert werden, den Teig in eine X°C warme Umgebung zu bringen, wobei X°C eine abgespeicherte Soll-Temperatur ist.

Nachdem der Brotteig nach Abschluss des Gärungsprozesses in den Ofen 19 gebracht worden ist, kann der Benutzer über die Backzeit informiert werden, so zum Beispiel die Information erhalten, dass die Backzeit in X Minuten endet. X Minuten ist eine abgespeicherte Sollzeit für den Backprozess. Wird durch die Steuereinrichtung 12 festgestellt, dass die im Ofen 19 herrschende Temperatur zu heiß ist, so kann der Benutzer über das Display 10 die Information erhalten, dass der Backofen zu heiß ist und außerdem die Handlungsanweisung, dass die Temperatur um X°C heruntergeregelt werden soll. Die Angabe X°C ist dann ein Wert, der von der Steuereinrichtung 12 durch Vergleich von Soll-Temperatur und Ist-Temperatur berechnet worden ist.

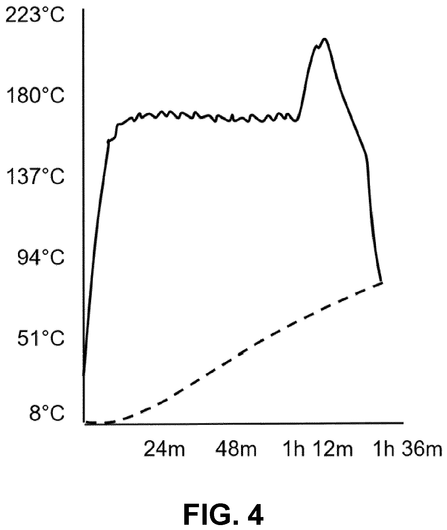

Die Figur 4 zeigt ein Beispiel für einen Temperaturverlauf in einem Backofen 19 mit einem darin befindlichen Brotteig 18, der durch die Erfindung realisiert worden ist. Aufgetragen ist die Temperatur gegenüber der Zeit. Die durchgezogene Linie zeigt die Temperatur, die durch den Temperatursensor 16 gemessen worden ist und folglich die Temperatur, die im Backofen herrschte. Die gestrichelte Linie zeigt die Temperatur, die durch den Temperatursensor 17 gemessen worden ist und folglich die Temperatur, die im Teig herrschte.

Zunächst wurde der Innenraum des Ofens 19 auf eine Temperatur von 170°C gebracht. Gegen Ende der Backzeit wurde ein Temperaturanstieg auf eine Temperatur von 220°C durchgeführt, um eine kross gebackene Kruste zu erhalten. Danach wurde die Wärmezufuhr ausgeschaltet. Nachdem die Innentemperatur des Ofens so auf ca. 80°C abgekühlt worden ist, wurde der Benutzer informiert über das Display 10 informiert, dass das Brot aus dem Backofen entnommen werden kann.

Durch den Abgleich der Prozessführung, insbesondere mit einem Referenzprozess, kann eine Gelinggarantie für bislang unkontrollierbare Schritte außerhalb der Küchenmaschine 1 erreicht werden.

Der Abgleich der Temperatur kann durch festgelegte Algorithmen erfolgen, also beispielsweise ein festes Regelwerk, eine fuzzy logic oder künstliche Intelligenz, die sich mit der Zeit auf die persönlichen Vorlieben des Nutzers weiter einstellen kann.

Eine weitere Vollautomatisierung lässt sich durch eine SmartHome-Integration bewerkstelligen. Hier kann beispielsweise die Backofentemperatur über entsprechende APIs nachgeregelt werden.

Neben harten Temperaturschwellen eignen sich zum Soll-/Ist-Abgleich
- Temperaturrampen;
- Haltezeiten auf einer bestimmten Temperatur;
- Kern- und Außentemperaturdifferenzen.

Die Interaktion und Auswahl des Backprozesses erfolgen über das Display 10 der Küchenmaschine 1. Hier kann der Nutzer unterschiedliche Programme auswählen, die die o.g. Informationen und Verfahren durchführen. Die Programme sind Lebensmittel- und Prozess-spezifisch.

Das System umfassend die Küchenmaschine 1 und das Speisenthermometer 13 kennt somit das Verhalten von Gargut wie zum Beispiel eines Steaks auf einem Grill oder das Verhalten von Backwaren im Ofen. Das System kann einen Benutzer und Herstellungsprozesse entsprechend steuern. Das System kann den Benutzer beispielsweise über Temperaturverlauf und Zieltemperaturen, sowie eine Abschätzung der Laufzeit des eines Garprozesses informieren. Des Weiteren kann das System beispielsweise Informationen über das Abkühlverhalten bereitstellen und wann ein Gargut wie zum Beispiel eine Backware fertig zum Verzehr ist.

Im Rahmen einer Rezeptentwicklung können Ist-Temperaturen für Kern- und Außentemperatur während des Backens eines Brotteigs 18 aufgezeichnet und in einer Speichereinheit zusammen mit der Information als Soll-Temperaturen gespeichert werden. Es wird dann auch gespeichert, dass sich die gespeicherten Temperaturen auf die Herstellung des Brotteigs 18 beziehen. Dies kann durch einen Benutzer geschehen.

Zur Erfindung gehört auch eine Rezeptentwicklungseinrichtung umfassend ein Computerprogramm und ein Gerät zum Ausführen des Computerprogramms. Die Rezeptentwicklungseinrichtung kann einen Benutzer im Rahmen einer Rezeptentwicklung unterstützen. Nutzer kennen beispielsweise in der Regel die Zieltemperatur bzw. das Backprofil von Backwaren nicht.

Die Rezeptentwicklungseinrichtung kann einen Benutzer auffordern, ein oder mehrere Zielgrößen zu bestimmen. Eine Zielgröße kann eine Temperatur oder ein Temperaturprofil sein. Eine solche Zielgröße kann einem Benutzer durch die Rezeptentwicklungseinrichtung vorgeschlagen werden. Mithilfe einer solchen Rezeptentwicklungseinrichtung kann auch für unerfahrene Benutzer ein Rezept erstellt werden. Die Rezeptentwicklungseinrichtung kann in die Küchenmaschine 1 integriert sein.

Soll ein Brotteig 18 ein nächstes Mal in gleicher Weise gebacken werden, so werden die gespeicherten Soll-Temperaturen mit den gemessenen und an die Steuereinrichtung übermittelten Ist-Temperaturen abgeglichen und Empfehlungen in Form von Handlungsanweisungen an den Nutzer übermittelt oder direkt ausgeführt.

## Patentansprüche

1. Verfahren für eine Zufuhr von Wärme zu einem Gargut (18) für eine Zubereitung einer Speise oder eines Getränks mit den Schritten:
• ein Speisenthermometer (13) mit vorzugsweise zwei Temperatursensoren (16, 17) wird in Gargut (18) hineingesteckt und zwar vorzugsweise so, dass sich ein Temperatursensor (16) außerhalb des Garguts (18) befindet und der andere Temperatursensor (17) sich im Gargut (18) befindet;
• dem Gargut (18) wird insbesondere mithilfe einer Heizeinrichtung Wärme zugeführt oder das Gargut (18) wird abgekühlt,
• das Speisenthermometer (13) übermittelt mit den ein oder mehreren Temperatursensoren (16, 17) gemessene Ist-Temperaturen an eine Steuereinrichtung (12);
• die Steuereinrichtung (12) steuert die Heizeinrichtung in Abhängigkeit von übermittelten Ist-Temperaturen durch Vergleich mit in einer Speichereinheit gespeicherten Soll-Temperaturen und/ oder
• die Steuereinrichtung (12) übermitteltet zumindest eine Handlungsanweisung aufgrund eines Vergleichs von zumindest einer übermittelten Ist-Temperatur mit zumindest einer in einer Speichereinheit gespeicherten Soll-Temperatur und/ oder
• die Steuereinrichtung (12) speichert zumindest eine übermittelte Ist-Temperatur in einer Speichereinheit als Soll-Temperatur in Abhängigkeit von einem Gargut.

2. Verfahren nach Anspruch 1, **dadurch gekennzeichnet, dass** ein erstes Soll-Temperaturprofil für den einen Temperatursensor (16) und/oder ein zweites Soll-Temperaturprofil für den anderen Temperatursensor (17) in Abhängigkeit vom Gargut (18) in der Speichereinheit gespeichert ist.

3. Verfahren nach dem vorhergehenden Anspruch, **dadurch gekennzeichnet, dass** ein in der Speichereinheit gespeichertes Temperaturprofil einen Temperaturanstieg gegen Ende der Garzeit umfasst.

4. Verfahren nach dem vorhergehenden Anspruch, **dadurch gekennzeichnet, dass** einem Teig Wärme gemäß dem in der Speichereinheit gespeicherten Temperaturprofil zugeführt wird, das einen Temperaturanstieg gegen Ende der Garzeit umfasst.

5. Verfahren nach dem vorhergehenden Anspruch, **dadurch gekennzeichnet, dass** nach dem Temperaturanstieg als Handlungsanweisung eine Abkühlzeit übermittelt wird.

6. Verfahren nach einem der vorhergehenden Ansprüche, **dadurch gekennzeichnet, dass** an den Benutzer als Handlungsanweisung übermittelt wird, dass der Benutzer einen Abstand zwischen Gargut (18) und Heizeinrichtung einstellen oder verändern soll.

7. Verfahren nach einem der vorhergehenden Ansprüche, **dadurch gekennzeichnet, dass** an den Benutzer als Handlungsanweisung übermittelt wird, dass der Benutzer eine Heiztemperatur der Heizeinrichtung einstellen oder verändern soll.

8. Verfahren nach einem der vorhergehenden Ansprüche, **dadurch gekennzeichnet, dass** vor der Zufuhr von Wärme zum Gargut (18) eine Dimension des Garguts ermittelt wird und gespeicherte Soll-Temperaturen in Abhängigkeit von der ermittelten Dimension des Garguts ausgewählt werden.

9. System zur Durchführung eines Verfahrens nach einem der vorhergehenden Ansprüche, mit
• einem Speisenthermometer (13) mit vorzugsweise zwei Temperatursensoren (16, 17);
• einer Heizeinrichtung;
• einer Steuereinrichtung (12), an die vom Speisenthermometer (13) mit den vorzugsweise wenigstens zwei Temperatursensoren (16, 17) gemessene Ist-Temperaturen übermittelt werden können; wobei die Steuereinrichtung (12) so eingerichtet ist, dass
• die Steuereinrichtung (12) die Heizeinrichtung in Abhängigkeit von übermittelten Ist-Temperaturen durch Vergleich mit in einer Speichereinheit gespeicherten Soll-Temperaturen steuern kann, und/ oder
• die Steuereinrichtung (12) Handlungsanweisungen an einen Benutzer aufgrund eines Vergleichs von übermittelten Ist-Temperaturen mit in einer Speichereinheit gespeicherten Soll-Temperaturen übermittelten kann und/ oder
• die Steuereinrichtung (12) übermittelte Ist-Temperaturen in einer Speichereinheit als Soll-Temperaturen in Abhängigkeit von Gargut (18) speichern kann.

10. System nach dem vorhergehenden Anspruch, **dadurch gekennzeichnet, dass** ein erstes Soll-Temperaturprofil für den einen Temperatursensor (16) und/oder ein zweites Soll-Temperaturprofil für den anderen Temperatursensor (17) in Abhängigkeit vom Gargut (18) in der Speichereinheit gespeichert ist.

11. System nach dem vorhergehenden Anspruch, **dadurch gekennzeichnet, dass** ein in der Speichereinheit gespeichertes Temperaturprofil einen Temperaturanstieg gegen Ende der Garzeit umfasst.

12. System nach einem der drei vorhergehenden Ansprüche, **dadurch gekennzeichnet, dass** dieses ein Display (10) und/oder einen Lautsprecher umfasst und die Steuereinrichtung (12) so eingerichtet ist, dass eine Handlungsanweisung an den Benutzer über das Display (10) grafisch und/oder über den Lautsprecher akustisch ausgegeben werden kann.

13. System nach dem vorhergehenden Anspruch, **dadurch gekennzeichnet, dass** das Display (10) ein Display eines Küchengeräts (1) oder eines Mobiltelefons ist und/oder dass der Lautsprecher ein Lautsprecher eines Küchengeräts (1) oder eines Mobiltelefons ist.

14. System nach einem der vorhergehenden Ansprüche 9 bis 13, **dadurch gekennzeichnet, dass** dieses eine Küchenmaschine (1) umfasst, die die Steuereinrichtung (12) aufweist.

15. System nach dem vorhergehenden Anspruch, **dadurch gekennzeichnet, dass** die Küchenmaschine (1) eine Rezeptentwicklungseinrichtung aufweist, wobei die Rezeptentwicklungseinrichtung so eingerichtet ist, dass diese einem Benutzer Soll-Temperaturen für die Erstellung eines Rezepts vorschlagen kann.
